# NEUE EUROPÄISCHE PATENTSCHRIFT

(11) **EP 2 274 532 B2**
(45) Veröffentlichungstag und Bekanntmachung des Hinweises auf die Entscheidung über den Einspruch: **03.08.2016**
(45) Hinweis auf die Patenterteilung: 01.02.2012
(21) Anmeldenummer: 09741856.0
(22) Anmeldetag: 04.05.2009
(51) Int. Cl.: F16D 65/097

(54) **BREMSBELAGANORDNUNG FÜR SCHEIBENBREMSEN**
BRAKE LINING ARRANGEMENT FOR DISC BRAKES
ENSEMBLE GARNITURE DE FREIN POUR FREINS À DISQUES

(30) Priorität: 06.05.2008 DE 102008022200
(43) Veröffentlichungstag der Anmeldung: 19.01.2011
(73) Patentinhaber: Lucas Automotive GmbH, 56070 Koblenz (DE)
(72) Erfinder: ROTH, Klaus, 56335 Neuhäusel (DE); HEES, Dirk, 56727 Mayen (DE)
(74) Vertreter: Thum, Bernhard
(86) Internationale Anmeldenummer: PCT/EP2009/003200
(87) Internationale Veröffentlichungsnummer: WO 2009/135637

(56) Entgegenhaltungen:
- EP-B- 0 609 245
- DE-A1- 4 332 709
- DE-A1- 4 335 001
- DE-A1- 10 238 734
- DE-A1- 10 238 734
- DE-U1- 9 000 489
- GB-A- 2 069 088
- US-A- 4 037 689
- US-A- 5 427 213
- US-A- 5 520 265
- US-A1- 2002 096 404

## Beschreibung

Die Erfindung betrifft eine Bremsbelaganordnung für Scheibenbremsen mit wenigstens einem an der Rückseite des Bremsbelags angeordneten Federzapfen undeinem mit diesem koppelbaren Federelement, wobei das Federelement einen Befestigungsabschnitt mit einer Aufnahmeöffnung zur Aufnahme des Federzapfens aufweist.

Eine derartige Anordnung ist beispielsweise aus EP 0 609 245 B1 bekannt. Bei dieser Bremsbelaganordnung wird zur Befestigung einer Haltefeder, über die der Bremsbelag samt plattenförmigem Bremsbelagträger in einer Bremssattelanordnung gehalten wird, ein Vorsprung an einer Belagrückenplatte angeformt, der aus der Plattenebene hervorsteht. Zur Befestigung der Haltefeder an der Belagrückenplatte weist die Haltefeder eine Öffnung auf, mit der sie überden Vorsprung gesteckt und in eine korrekte Winkellage gebracht werden kann. Befindet sich die Haltefeder in einer korrekten Position wird der Vorsprung vernietet, das heißt plastisch verformt, so dass er zur Seite hin verbreitert über die Ränder der Öffnung ragt und die Haltefeder an die Belagrückenplatte anpresst. Bei der Vernietung verformt sich auch der durch die Öffnung durchragende Abschnitt des Vorsprungs. Der Querschnitt des Vorsprungs wird durch die Vernietung ebenfalls verbreitert bis er an die Ränder der Öffnung anstößt und seine Form an die quadratische Form der Öffnung anpasst.

Diese Haltefeder kann sich trotz der Vernietung aus ihrer Sollposition heraus verdrehen oder sich sogar von dem Vorsprung an der Belagrückenplatte ablösen, da sie nur durch die Anpassung des Vorsprungs an die Form der Öffnung in ihrer Position gehalten wird. Gerade im Betrieb einer Scheibenbremse mit einem Bremsklotz gemäß EP 0 609 245 B1 ist es aufgrund der in einem Fahrzeug auftretenden Vibrationen und Schläge leicht möglich, dass die Öffnung der Haltefeder oder der Vorsprung deformiert werden und ein Verdrehen der Haltefeder nicht mehr verhindern können. Zudem kann nach der Vernietung Durchsichtsprüfung nicht hinreichend zuverlässig festgestellt werden, ob sich der Querschnitt des Vorsprungs ausreichend vergrößert hat und eine ausreichender Formschluss zwischen beiden Komponenten entsteht.

Es ist deshalb Aufgabe der vorliegenden Erfindung eine Bremsbelaganordnung bereitzustellen, bei der ein Federelement dauerhaft verdrehgesichert an seiner vorbestimmten Position gehalten wird und dessen Befestigung überprüfbar ist.

Diese Aufgabe wird mit einer Bremsbelaganordnung mit den Merkmalen des Anspruchs 1 gelöst. Dabei ist vorgesehen, dass an der von dem Bremsbelag abgewandten Oberfläche des Befestigungsabschnitts des Federelements eine Profilierung ausgebildet ist, die bei einer plastischen Verformung des Federzapfens zum Festlegen des Federelements mit diesem in Eingriff gelangt und das Federelement in einer vorbestimmten Position festlegt. Bei der Montage wird der Federzapfens, ebenso wie beim Stand der Technik, plastisch deformiert. Sein Material fließt dabei in die Profilierung und sorgt zum einen für eine Verdrehsicherung, zum anderen lässt sich dadurch erkennen, ob eine hinreichende Befestigung des Federelements in Folge der plastischen Verformung des Federzapfens gewährleistet ist.

Eine Weiterbildung der Erfindung sieht vor, dass die Oberfläche des Befestigungsabschnitts eine unregelmäßige Oberflächenstruktur, insbesondere in Form einer Verzahnung, einer Rändelung oder einer Riffelung, aufweist. In diesem Zusammenhang ist zu erwähnen, dass die unregelmäßige Oberflächenstruktur gemäß der Erfindung zumindest abschnittsweise um die Aufnahmeöffnung herum ausgebildet sein kann.

Um eine möglichst hohe Sicherheit gegen Verdrehen bzw. eine dauerhafte Befestigung des Federelements in einer vorbestimmten Position zu erreichen, sieht eine bevorzugte Ausführungsform der Erfindung vor, dass der Federzapfen durch Vernieten oder Verstemmen plastisch verformt wird, wobei eine formschlüssige Verbindung zwischen dem Federelement und der profilierten Oberfläche des Federelements entsteht. Durch die plastische Verformung wird der Federzapfen derart verformt, dass er in die Oberflächenstruktur des Federelements eingreift und die erwähnte formschlüssige Verbindung zwischen diesen beiden Komponenten herstellt. Ferner kann, wie vorstehend ebenfalls angedeutet, nach der Vernietung durch Inaugenscheinnahme festgestellt werden, ob ein ausreichender Formschluss zwischen der profilierten Oberfläche und dem Federzapfen hergestellt wurde.

Hinsichtlich der Anordnung des Federzapfens an der Bremsbelaganordnung kann vorgesehen sein, dass der Federzapfen direkt an dem Bremsbelag beziehungsweise einem plattenförmigem Bremsbelagträger oder als ein separates, an dem Bremsbelag anbringbares Bauteil, beispielsweise in Form eines separaten Bolzens, ausgebildet ist. In diesem Zusammenhang ist ferner zu erwähnen, dass der Federzapfen einen Nietkopf aufweisen kann.

Zur Anbringung der Bremsbelaganordnung an dem Bremskolben einer Scheibenbremse sieht die Erfindung vor, dass das Federelement einen Bügelabschnitt mit einer Rastformation an seinem Ende aufweist. Ferner sind zur Anbringung des Federelements an der Bremsbelaganordnung gemäß der Erfindung an dem Bremsbelag Vorsprünge ausgebildet, an denen das Federelement durch den Federzapfen befestigbar ist, wobei in diesem Fall der Bügelabschnitt des Federelements über die Vorsprünge vorsteht.

Zur Positionierung bzw. Zentrierung der Bremsbelaganordnung bei der Anbringung an eine Bremse bzw. einem Bremskolben kann ferner vorgesehen sein, dass der Bremsbelag Positionierelemente aufweist.

Die Erfindung betrifft ferner eine Scheibenbremse mit einer erfindungsgemäßen Bremsbelaganordnung.

Im Folgenden wird mit Bezug auf die beigefügten Figuren ein bevorzugtes Ausführungsbeispiel der Erfindung erläutert. Es zeigt:
- Fig.1: eine perspektivische Teilansicht einer erfindungsgemäßen Bremsbelaganordnung;
- Fig.2: eine Seitenansicht der Bremsbelaganordnung gemäß Figur 1;
- Fig.3: eine Vorderansicht der Bremsbelaganordnung gemäß Figur 1;
- Fig.4: eine perspektivische Gesamtansicht der erfindungsgemäßen Bremsbelaganordnung.

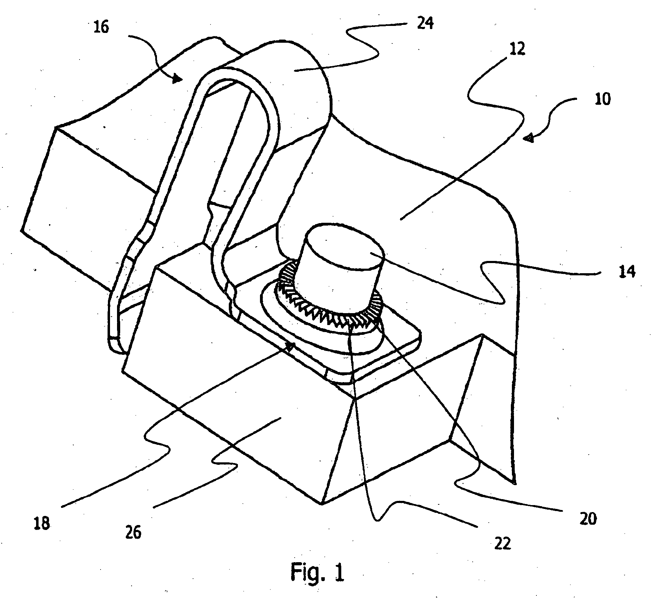

Fig.1 zeigt eine Bremsbelaganordnung 10 mit einem an der Rückseite des Bremsbelags 12 angeordneten Federzapfen 14 und einem Federelement 16 nach der Vernietung des Federzapfens 14. Ferner erkennt man aus Fig.1 einen Befestigungsabschnitt 18 des Federelements 16, der zumindest abschnittsweise um eine Aufnahmeöffnung 20 eine unregelmäßige Oberflächenstruktur 22 bzw. eine Profilierung aufweist. Die Oberflächenstruktur 22 kann insbesondere in Form einer Verzahnung, Rändelung oder Riffelung ausgebildet sein. An dem Federelement 16 ist zudem ein Bügelabschnitt 24 vorgesehen, mit dem eine Befestigung der Bremsbelaganordnung 10 an einem nicht gezeigten Bremskolben einer Scheibenbremse möglich ist.

Fig.1 zeigt ferner einen Vorsprung 26, an dem das Federelement 16 durch den Federzapfen 14 befestigbar ist. Man erkennt weiterhin, dass der Bügelabschnitt 24 mit seinem Endbereich über den Vorsprung 26 in den Querschnitt des Bremsbelag 12 vorsteht.

Zur Befestigung des Federelements 16 an dem Bremsbelag 12 wird das Federelement 16 auf den Federzapfen 14 aufgesteckt. Das Federelement 16 nimmt hierzu den Federzapfen 14 mit seiner Aufnahmeöffnung 20 auf. Das Federelement 16 wird mit seinem Befestigungsabschnitt 18 in eine vorbestimmte Position an dem Vorsprung 26 gebracht. Anschließend wird der Federzapfen 14 plastisch verformt, d.h. vernietet oder verstemmt. Durch die plastische Verformung fließt Material des Federzapfens 14 in dem Bereich der profilierten Oberfläche 22 an dem Befestigungsabschnitt 18 des Federelements 16 und gelangt mit diesem in formschlüssigen Eingriff. Das Material des Federzapfens 14 fließt also in Folge seiner plastischen Verformung in die Zahnzwischenräume der profilierten Oberflächestruktur 22 des Befestigungsabschnitts 18. Dadurch wird eine formschlüssige Verbindung mit der Oberflächenstruktur 22 des Befestigungsabschnitts 18 hergestellt, durch die das Federelement 16 fest und verdrehsicher an der Rückseite des Bremsbelags 12 befestigt wird.

Im Anschluss an die vorstehend beschriebene Montage kann durch Inaugenscheinnahme geprüft werden, ob ein ausreichender Formschluss zwischen der profilierten Oberfläche 22 und dem Federzapfen 14 hergestellt wurde.

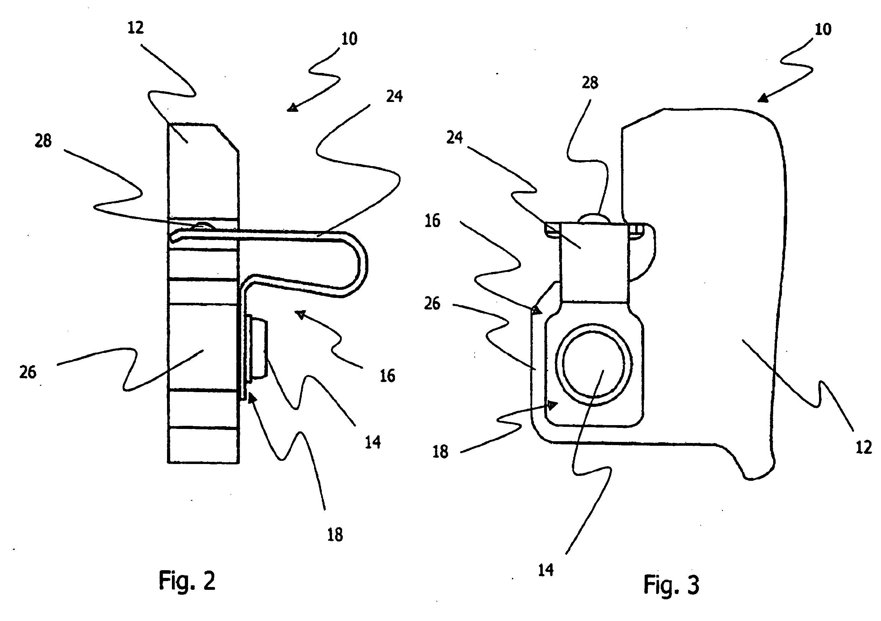

Fig.2 zeigt eine Seitenansicht der Bremsbelaganordnung 10 nach dem Vernieten oder Verstemmen des Federzapfens 14. Man erkennt deutlich aus Fig.2, dass sich der Querschnitt des Federzapfens 14 vergrößert hat und mit der hier nicht gezeigten unregelmäßigen Oberflächenstruktur 22 eine formschlüssige Verbindung zwischen dem Federzapfen 14 und der Oberflächenstruktur des Befestigungsabschnitts 18 des Federelements 16 hergestellt wurde. Aus Fig.2 geht ebenfalls hervor, dass der Bügelabschnitt 23 des Federelements 16 oberhalb des Vorsprungs 26 den Bremsbelag 12 überlappt. Der Bügelabschnitt 24 weist an seinem Ende, das über den Vorsprung 26 ragt, eine Rastformation 28 auf, durch die der Bremsbelag 12 mit einem korrespondierenden Gegenstück an einem nicht gezeigten Bremskolben beziehungsweise einer Sattelanordnung einer Scheibenbremse eine Rastverbindung herstellen kann.

Fig.3 zeigt eine Vorderansicht der Bremsbelaganordnung nach dem Vernieten. So erkennt man erneut den Vorsprung 26 an dem das Federelement 16 mit seinem Befestigungsabschnitt 18 angeordnet ist, sowie den über den Vorsprung 26 hinausragenden Bügelabschnitt 24. Man erkennt weiter aus Fig.3 die Rastformation 28 an dem Bügelabschnitt 24 des Federelements 16.

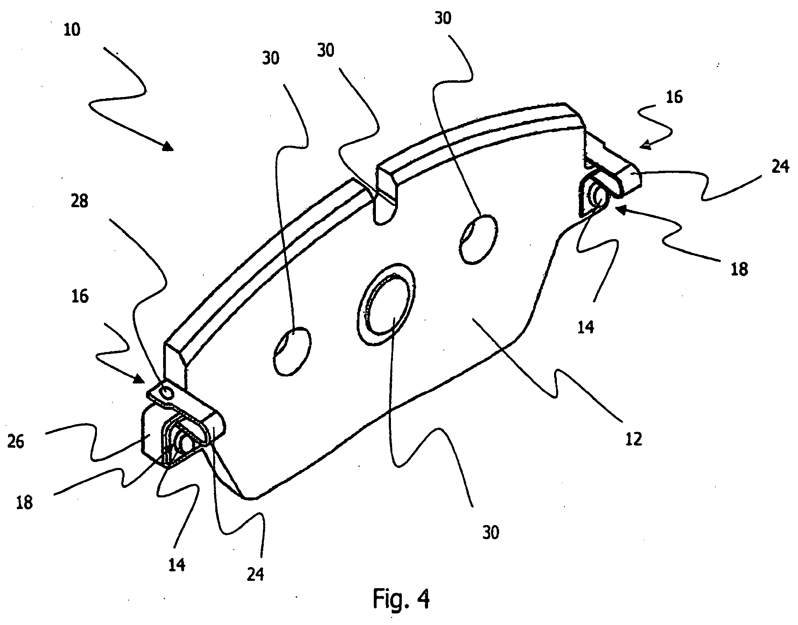

Fig.4 zeigt eine perspektivische Gesamtansicht der Bremsbelaganordnung 10, die die Position der Federelemente 16 an dem Bremsbelag 12 weiter verdeutlicht. An den Seiten des Bremsbelags 12 sind die bereits erwähnten Vorsprünge 26 ausgebildet, an denen die beiden Federelemente 16 mit ihren Befestigungsabschnitten 18 mittels der Federzapfen 14 befestigt werden können. Der Bügelabschnitt 24 der Federelemente 16 überlappt oberhalb der Vorsprünge 26 den Bremsbelag 12.

In Fig.4 erkennt man ferner Positionierelemente 30 zur Positionierung bzw. Zentrierung der Bremsbelaganordnung 10 an einem nicht gezeigten Bremskolben einer Sattelbremsenanordnung. Durch die Positionierelemente 30 wird eine Montage der Bremsbelaganordnung erleichtert und beschleunigt, da zu den Positionierelementen 30 korrespondierende Gegenstücke an den Bremskolben ausgebildet sind.

## Patentansprüche

1. Bremsbelaganordnung (10) für Scheibenbremsen mit wenigstens einem an der Rückseite des Bremsbelags (10) angeordneten Federzapfen (14) und einem mit diesem koppelbaren Federelement (16), wobei das Federelement (16) einen Befestigungsabschnitt (18) mit einer Aufnahmeöffnung (20) zur Aufnahme des Federzapfens (14) aufweist,
**dadurch gekennzeichnet, dass** an der von dem Bremsbelag (12) abgewandten Oberfläche des Befestigungsabschnitts (18) des Federelements (16) eine Profilierung (22) ausgebildet ist, die bei einer plastischen Verformung des Federzapfens (14) zum Festlegen des Federelements (16) mit diesem in Eingriff gelangt und das Federelement (16) in einer vorbestimmten Position festlegt,
dass das Federelement (16) einen Bügelabschnitt (24) mit einer Rastformation (28) an seinem Ende aufweist, und
dass an dem Bremsbelag (12) Vorsprünge (26) ausgebildet sind, an denen das Federelement (16) durch den Federzapfen (14) befestigbar ist, wobei der Bügelabschnitt (24) des Federelements (16) über die Vorsprünge (26) vorsteht.

2. Bremsbelaganordnung (10) nach Anspruch 1,
**dadurch gekennzeichnet, dass** die Oberfläche des Befestigungsabschnitts (18) eine unregelmäßige Oberflächenstruktur (22), insbesondere in Form einer Verzahnung, einer Rändelung oder einer Riffelung, aufweist.

3. Bremsbelaganordnung (10) nach Anspruch 2,
**dadurch gekennzeichnet, dass** die unregelmäßige Oberflächenstruktur (22) zumindest abschnittsweise um die Aufnahmeöffnung (20) herum ausgebildet ist.

4. Bremsbelaganordnung (10) nach einem der Ansprüche 1 oder 2,
**dadurch gekennzeichnet, dass** der Federzapfen (14), insbesondere durch Vernieten oder Verstemmen, plastisch verformbar ist, wobei eine formschlüssige Verbindung zwischen dem Federzapfen (14) und der Oberfläche (22) des Federelements (16) entsteht.

5. Bremsbelaganordnung (10) nach einem der vorangehenden Ansprüche,
**dadurch gekennzeichnet, dass** der Federzapfen (14) direkt an dem Bremsbelag (12) ausgebildet oder als ein separates, an dem Bremsbelag (12) anbringbares Bauteil ausgebildet ist.

6. Bremsbelaganordnung (10) nach Anspruch 4,
**dadurch gekennzeichnet, dass** der Federzapfen (14) einen Nietkopf aufweist.

7. Bremsbelaganordnung (10) nach einem der vorangehenden Ansprüche,
**dadurch gekennzeichnet, dass** der Bremsbelag (12) Positionierelemente (30) aufweist.

8. Scheibenbremse mit einer Bremsbelaganordnung (10) nach einem der Ansprüche 1 bis 6.

## Claims

1. Brake lining arrangement (10) for disc brakes having at least one spring journal (14) arranged on the back of the brake lining (12) and a spring element (16) that may be coupled to the spring journal (14), wherein the spring element (16) has a fastening section (18) with a receiving opening (20) for receiving the spring journal (14),
**characterized in that** on the surface of the fastening section (18) of the spring element (16) remote from the brake lining (12) a profiling (22) is configured, which during a plastic deformation of the spring journal (14) to fix the spring element (16) comes into engagement therewith and fixes the spring element (16) in a predetermined position, that the spring element (16) has on its end a bow section (24) with a detent formation (28),
that there are formed on the brake lining (12) projections (26), to which the spring element (16) may be fastened by means of the spring journal (14), wherein the bow section (24) of the spring element (16) projects above the projections (26).

2. Brake lining arrangement (10) according to claim 1,
**characterized in that** the surface of the fastening section (18) has an irregular surface structure (22), in particular in the form of toothing, knurling or fluting.

3. Brake lining arrangement (10) according to claim 2,
**characterized in that** the irregular surface structure (22) is formed at least in sections around the receiving opening (20).

4. Brake lining arrangement (10) according to one of claims 1 or 2,
**characterized in that** the spring journal (14) is plastically deformable, in particular by riveting or caulking, wherein a positive connection is produced between the spring journal (14) and the surface (22) of the spring element (16).

5. Brake lining arrangement (10) according to one of the preceding claims,
**characterized in that** the spring journal (14) is formed directly on the brake lining (12) or takes the form of a separate component that is mountable on the brake lining (12).

6. Brake lining arrangement (10) according to claim 4,
**characterized in that** the spring journal (14) comprises a rivet head.

7. Brake lining arrangement (10) according to one of the preceding claims,
**characterized in that** the brake lining (12) has positioning elements (30).

8. Disc brake having a brake lining arrangement (10) according to one of claims 1 to 6.

## Revendications

1. Agencement de garniture de frein (10) pour freins à disque, comprenant au moins un tenon à ressort (14) agencé sur le côté arrière de la garniture de frein (10), et un élément de ressort (16) pouvant être couplé à ce tenon de ressort, l'élément de ressort (16) présentant un tronçon de fixation (18) avec une ouverture de réception (20) destinée à recevoir le tenon à ressort (14),
**caractérisé en ce que** sur la surface du tronçon de fixation (18) de l'élément de ressort (16), qui est opposée à celle dirigée vers la garniture de frein (12), est formée un profilage (22) qui, lors d'une déformation plastique du tenon de ressort (14) pour la fixation de l'élément de ressort (16), vient en prise avec celui-ci, et fixe l'élément de ressort (16) dans une position prédéterminée,
**en ce que** l'élément de ressort (16) présente un tronçon en étrier (24) comprenant une configuration d'encliquetage (28) à son extrémité, et
**en ce que** sur la garniture de frein (12) sont formées des épaulements (26) auxquels peut être fixé l'élément de ressort (16) par l'intermédiaire du tenon à ressort (14), le tronçon en étrier (24) de l'élément de ressort (16) dépassant lesdits épaulements (26).

2. Agencement de garniture de frein (10) selon la revendication 1,
**caractérisé en ce que** la surface du tronçon de fixation (18) présente une structure de surface irrégulière (22), notamment sous la forme d'une denture, d'un moletage ou d'un striage.

3. Agencement de garniture de frein (10) selon la revendication 2,
**caractérisé en ce que** la structure de surface irrégulière (22) est formée au moins par secteurs autour de l'ouverture de réception (20).

4. Agencement de garniture de frein (10) selon l'une des revendications 1 ou 2,
**caractérisé en ce que** le tenon à ressort (14) peut subir une déformation plastique notamment par rivetage ou matage, en créant une liaison par complémentarité de formes entre le tenon à ressort (14) et la surface (22) de l'élément de ressort (16).

5. Agencement de garniture de frein (10) selon l'une des revendications précédentes,
**caractérisé en ce que** le tenon à ressort (14) est formé directement sur la garniture de frein (12), ou est réalisé en tant que pièce distincte pouvant être rapportée sur la garniture de frein (12).

6. Agencement de garniture de frein (10) selon la revendication 4,
**caractérisé en ce que** le tenon à ressort (14) présente une tête de rivetage.

7. Agencement de garniture de frein (10) selon l'une des revendications précédentes,
**caractérisé en ce que** la garniture de frein (12) présente des éléments de positionnement (30).

8. Frein à disque comprenant un agencement de garniture de frein (10) selon l'une des revendications 1 à 6.
